# EUROPEAN PATENT APPLICATION

(11) **EP 4 212 567 A1**
(43) Date of publication of application: **19.07.2023**
(21) Application number: 21864063.9
(22) Date of filing: 10.08.2021
(51) Int. Cl.: C08G 59/00, C08G 59/20, C08K 7/18, C08K 13/04, C08L 75/04, C08G 18/10, C08G 18/58, C08G 18/80

(54) **EPOXY RESIN COMPOSITION**

(30) Priority: 07.09.2020 JP 2020149592
(71) Applicant: ThreeBond Co., Ltd., Tokyo 192-0398 (JP)
(72) Inventor: YASUNAGA Kana, Hachioji-shi, Tokyo 192-0398 (JP); MORITOKI Tatsuya, Hachioji-shi, Tokyo 192-0398 (JP); SHIMOKAWA Eiji, Hachioji-shi, Tokyo 192-0398 (JP)
(74) Representative: Hasegawa, Kan
(86) International application number: PCT/JP2021/029510
(87) International publication number: WO 2022/050005

(57) **Abstract**

Provided is an epoxy resin composition that, although it can be cured even at a low temperature, can form a cured product having excellent impact resistance and has excellent adhesive strength. Specifically, provided is an epoxy resin composition containing: (A) an epoxy resin which is liquid at 25°C; (B) an epoxy resin which is solid at 25°C; (C) a rubber-modified epoxy resin (excluding the (A) and the (B)); (D) a blocked urethane resin; (E) a spherical inorganic filler having an average particle size of 0.1 µm to 150 µm; (F) an organic filler; and (G) a latent curing agent.

## Description

### Technical Field

The present invention relates to an epoxy resin composition. Particularly, the present invention relates to an epoxy resin composition which is excellent in low-temperature curability and impact resistance, preferably an epoxy resin composition for structures.

### Background Art

Recently, in the automobile industry, there have been demands for reduction in emission of exhaust gases by means of improvements in fuel economy, and the like, requiring reductions in weight of vehicle bodies. Conventionally, metals have been mainly used for frames of vehicle bodies; however, diversification of members is in progress, including partial use of plastic members, in order to achieve lighter weights. Along with this, there is a tendency that joining, which has conventionally been conducted by using welding, is conducted by using adhesives such as epoxy resins instead (Patent Literature 1).

### Citation List

### Patent Literature

Patent Literature 1: Japanese Patent Application Publication No. 2019-147896

### Summary of Invention

However, although there are many epoxy resins having high adhesive forces, the conventional epoxy resins are not satisfactory in terms of impact resistances, which are required for the performances of vehicle bodies. In addition, there has been a problem that epoxy resins excellent in impact resistances have high curing temperatures, and are difficult to use for various members, and subject members are limited.

As a result of conducting earnest studies in order to solve the above-described problems, the present inventors have found a method for obtaining an epoxy resin composition which is excellent in impact resistance while having low-temperature curability.

Specifically, the present invention may be the following aspects:
[1] An epoxy resin composition comprising:
   (A) an epoxy resin which is liquid at 25°C;
   (B) an epoxy resin which is solid at 25°C;
   (C) a rubber-modified epoxy resin (excluding the (A) and the (B));
   (D) a blocked urethane resin;
   (E) a spherical inorganic filler having an average particle size of 0.1 µm to 150 µm;
   (F) an organic filler; and
   (G) a latent curing agent.
[2] The epoxy resin composition according to the [1], wherein
   the (B) contains a bisphenol-type epoxy resin.
[3] The epoxy resin composition according to the [1] or [2], wherein
   the (E) is a glass filler.
[4] The epoxy resin composition according to any one of the [1] to [3], wherein
   the (G) contains dicyandiamide or a derivative thereof and/or an amine adduct compound.
[5] The epoxy resin composition according to any one of the [1] to [4], wherein
   a mass ratio of the (A):the (B) is 5:5 to 9:1.
[6] The epoxy resin composition according to any one of the [1] to [5], wherein
   a content of the (C) is 0.1 to 50 parts by mass relative to a total 100 parts by mass of the (A) and the (B).
[7] The epoxy resin composition according to any one of the [1] to [6], wherein
   a content of the (E) is 0.1 to 10 parts by mass relative to a total amount 100 parts by mass of the (A) and the (B).
[8] The epoxy resin composition according to any one of the [1] to [7], wherein
   the epoxy resin composition has a dynamic resistance to cleavage of 30 kN/m or more when cured at 130°C for 30 minutes.
[9] The epoxy resin composition according to any one of the [1] to [8] which is a one-component epoxy resin composition.
[10] Use of the epoxy resin composition according to any one of the [1] to [9] as an adhesive for bonding adherends to each other.
[12] A method for curing the epoxy resin composition according to any one of the [1] to [9], comprising:
   further heating the epoxy resin composition at a temperature of 80°C or more and less than 170°C.

In addition, the present invention may be as follows:
[1] A epoxy resin composition comprising the following (A) to (G):
   (A) an epoxy resin which is liquid at 25°C;
   (B) an epoxy resin which is solid at 25°C;
   (C) a rubber-modified epoxy resin (excluding the (A) and the (B));
   (D) a blocked urethane resin;
   (E) a true-spherical inorganic filler having an average particle size of 0.1 µm to 150 µm;
   (F) an organic filler; and
   (G) a latent curing agent.
[2] The epoxy resin composition according to [1], wherein
   the (B) contains a bisphenol-type epoxy resin.
[3] The epoxy resin composition according to [1] or [2], wherein
   the true-spherical inorganic filler of the (E) is a glass filler.
[4] The epoxy resin composition according to any one of [1] to [3], wherein
   the (G) contains dicyandiamide or a derivative thereof and/or an amine adduct compound.
[5] The epoxy resin composition according to any one of [1] to [4], wherein
   a mass ratio between the (A) and the (B) is 5:5 to 9:1.
[6] The epoxy resin composition according to any one of [1] to [5], wherein
   a content of the (C) is 0.1 to 30 parts by mass relative to a total 100 parts by mass of the (A) and the (B).
[7] The epoxy resin composition according to any one of [1] to [6], wherein
   a content of the (E) is 0.1 to 10 parts by mass relative to a total amount 100 parts by mass of the (A) and the (B).
[8] The epoxy resin composition according to any one of [1] to [7], wherein
   the epoxy resin composition has a dynamic resistance to cleavage of 30 kN/m or more when cured at 130°C for 30 minutes.
[9] A cured product obtained by curing the epoxy resin composition according to any one of [1] to [8].

Since the epoxy resin composition of the present invention is, although having low-temperature curability, excellent in impact resistance, the epoxy resin composition of the present invention can be applied to various members and is very useful.

### Description of Embodiments

Hereinafter, details of the present invention are described. Note that in the Specification, "X to Y" is used to mean to contain the numerical values (X and Y) stated at the front and rear ends thereof as the lower limit value and the upper limit value, and means "X or more and Y or less". Such statements of numerical value ranges are examples, and ranges obtained by combining the lower limit X and the upper limit Y of each range as well as numerical values of Examples as appropriate can be favorably used. In addition, preferable aspects, more preferable aspects, and the like given below as examples can be used in combination with one another as appropriate irrespective of the expressions of "preferable", "more preferable", and the like. Furthermore, the terms "contain", "comprise", and the like may be read as "consisting essentially of" or "consisting of".

### <Component (A)>

The (A) used in the present invention is an epoxy resin which is liquid at 25°C. Although the (A) is not particularly limited as long as it is liquid at 25°C, an epoxy resin having two or more glycidyl groups is preferable, an epoxy resin having two glycidyl groups is more preferable, and an epoxy resin having one glycidyl group at each terminal, two in total is further preferable, from the viewpoint of the low-temperature curability. Specifically, the (A) includes bisphenol A-type epoxy resins, bisphenol F-type epoxy resins, bisphenol S-type epoxy resins, bisphenol AD-type epoxy resins, naphthalene-type epoxy resins, biphenyl-type epoxy resins, phenol novolac-type epoxy resins, brominated bisphenol A-type epoxy resins, hydrogenated bisphenol A-type epoxy resins, glycidyl amine-type epoxy resins, dicyclopentadiene-type epoxy resins, ortho-cresol novolac-type epoxy resins, alicyclic epoxy resins, and the like, but is not limited to these. One of these may be used alone or two or more of them may be used in mixture. Among these, one having a bisphenol skeleton is preferable, and a bisphenol A-type epoxy resin or a bisphenol F-type epoxy resin is further preferable, from the viewpoint of improving the impact resistance.

The epoxy equivalent of the (A) is preferably 100 to 500 g/eq, more preferably 120 to 400 g/eq, and most preferably 150 to 300 g/eq, from the viewpoint of the low-temperature curability. The viscosity of the (A) is preferably 0.1 Pa·s to 200 Pa·s, more preferably 1 Pa·s to 100 Pa·s, and further preferably 2 to 50 Pa·s, at 25°C, from the viewpoint of of the workability.

Commercial products of the (A) include, for example, D.E.R 331, 332, 383, 330, 337, 354 (produced by The Dow Chemical Company), jER 825, 827, 828, 828EL, 828US, 828XA, 834, 806, 806H, 807, 152, 604, 630, 871, 872, 890, 1750, YX8000, YX8034, YL980, YL983U, YX7105 (produced by Mitsubishi Chemical Corporation), EPICLON 840, 840-S, 850, 850-S, EXA-850CRP, 850-LC, 830, 830-S, 835, EXA-830CRP, EXA-830LVP, EXA-835LV, 855, 857, D-591, D-595, TSR-960, 1650-75MPX, 5500, 5800, HD-4032D, EXA-4850-150, EXA-4850-1000, EXAA-4816, HP-820 (produced by DIC Corporation), YD-115, YD-115CA, YD-127, YD-128, YD-128G, YD-128S, YD-128CA, YD-134, YDF-170, YDF-170N, YD-8125, YDF-8170C, ZX-1059, YD-825GS, YDF-870GS, PG207GS, ZX-1658GS (produced by NIPPON STEEL Chemical & Material Co., Ltd.), EP-4100, EP-4100G, EP-4100E, EP-4100TX, EP-4300E, EP-4400, EP-4520S, EP-4530, EP-4901, EP4901E, EP-4000, EP-4005, EP-7001, EP-4080E, EPU-6, EPU-7N, EPU-17, EPU-80 (produced by ADEKA CORPORATION), and the like, but are not limited to these.

### <Component (B)>

The (B) used in the present invention is an epoxy resin which is solid at 25°C. Although the (B) is not particularly limited as long as it is solid at 25°C, an epoxy resin having two or more glycidyl groups in one molecule is preferable, an epoxy resin having two glycidyl groups is more preferable, and an epoxy resin having one glycidyl group at each terminal, two in total is further preferable, from the viewpoint of the curability. Specific examples of the (B) include bisphenol A-type epoxy resins, bisphenol F-type epoxy resins, bisphenol S-type epoxy resins, bisphenol AD-type epoxy resins, naphthalene-type epoxy resins, biphenyl-type epoxy resins, phenol novolac-type epoxy resins, brominated bisphenol A-type epoxy resins, hydrogenated bisphenol A-type epoxy resins, glycidyl amine-type epoxy resins, dicyclopentadiene-type epoxy resins, ortho-cresol novolac-type epoxy resins, alicyclic epoxy resins, and the like, but the (B) is not limited to these. One of these may be used alone or two or more of them may be mixed and used. Among these, one having a bisphenol skeleton is preferable, and a bisphenol A-type epoxy resin or a bisphenol F-type epoxy resin is further preferable, from the viewpoint of improving the compatibility with the (A) and the impact resistance.

The epoxy equivalent of the (B) is preferably 400 to 10000 g/eq, more preferably 400 to 7000 g/eq, and most preferably 400 to 5000 g/eq, from the viewpoint of improving the impact resistance. The softening point of the (B) is preferably 20 to 200°C, more preferably 30 to 180°C, and most preferably 50 to 170°C, from the viewpoint of exhibiting high adhesive force when mixed with the (A).

Commercial products of the component (B) include jER 1001, 1002, 1003, 1004, 1007, 1009, 1010, 1003F, 1004F, 1005F, 1009F, 4005P, 4007P, 4010P, 1256, 4250,4275, 154, 157S70, 1032H60, YX7700, YX8800, YX7760, YX4000 (produced by Mitsubishi Chemical Corporation), D.E.R 671, 661E, 662E, 692, 663U (produced by The Dow Chemical Company), EPICLON 1050, 1055, 2050, 3050, 4050, 7050, HM-091, HM-101, N-660, N-665, N-670, N-673, N-680, N-690, N-695, N-730A, N-740, N-770, N-775, TSR-601 (produced by DIC Corporation), and the like.

The content of the (B) is preferably 5 to 50 parts by mass, further preferably 10 to 40 parts by mass, and most preferably 15 to 30 parts by mass, relative to 100 parts by mass of the (A). When the content of the (B) is 5 parts by mass or more, the impact resistance can be improved, and when the content of the (B) is 50 parts by mass or less, there is no possibility that the workability or the adhesive force is lowered.

The (A) and the (B) are mixed in a mass ratio of preferably 5:5 to 9:1, further preferably 6:4 to 9:1, and most preferably 7:3 to 9:1. When the mass ratio is 5:5 to 9:1, it is possible to improve the impact resistance without impairing the workability.

A preferable aspect of the components (A) and (B) includes a bisphenol A-type epoxy resin represented by the following structure, that has one glycidyl group at each terminal, two in total. A bisphenol A-type epoxy resin that has the following structure and is liquid at 25°C is preferably used as the component (A), while a bisphenol A-type epoxy resin that has the following structure and is solid at 25°C is preferably used as the component (B):
wherein n is for example, 0 to 2 or 1 to 2 in the case of the component (A), and 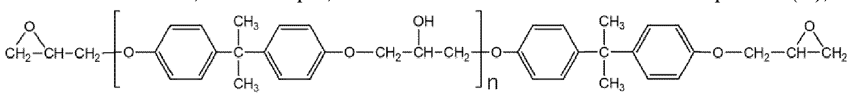 is, for example, 3 to 20, and preferably 5 to 15 in the case of the component (B).

### <Component (C)>

The (C) of the present invention is a rubber-modified epoxy resin. However, the (A) and (B) are not included in the (C). That is, the (C) is a component different from the (A) or the (B). The rubber-modified epoxy resin of the present invention is a compound obtained by reacting a rubber such as butadiene rubber, acrylic rubber, silicone rubber, butyl rubber, olefin rubber, styrene rubber, acrylonitrile butadiene rubber, styrene butadiene rubber, isoprene rubber, or ethylene propylene rubber with epoxy groups in an epoxy resin. Among these, a compound obtained by reacting acrylonitrile butadiene rubber with epoxy groups is preferable because this compound is excellent in impact resistance.

The epoxy equivalent of the (C) is preferably 200 to 700 g/eq, further preferably 300 to 600 g/eq, and most preferably 350 to 500 g/eq. When the epoxy equivalent of the (C) is 200 to 700 g/eq, a composition excellent in impact resistance can be obtained while there is no possibility that the curability is impaired.

The content of the (C) is preferably 0.1 to 50 parts by mass, preferably 0.5 to 30 parts by mass, and most preferably 1 to 15 parts by mass, relative to the total 100 parts by mass of the (A) and the (B). When the content of the (C) is 0.1 or more, a composition excellent in impact resistance can be obtained, and when the content of the (C) is 50 parts by mass or less, there is no possibility that the adhesive strength is lowered.

Commercial products of the (C) include EPR-1415-1, EPR-2000, EPR02007, EPR-1630 (produced by ADEKA CORPORATION), TSR-960, TSR-601 (produced by DIC Corporation), and the like.

### <Component (D)>

The (D) of the present invention is a blocked urethane resin. The blocked urethane resin mentioned in the present invention refers to a compound obtained by blocking active isocyanate groups remaining in molecular chain terminals or a molecular chain of a urethane resin (polyurethane) obtained by reacting an isocyanate compound and a polyhydroxy compound by using a blocking agent. Blocking mentioned herein means that the active isocyanate groups and the blocking agent react to stabilize the active isocyanate groups so that the active isocyanate groups will not react until the temperature reaches a predetermined temperature by heating. In other words, the blocked urethane resin of the component (B) of the present invention is a urethane resin (polyurethane) obtained by reacting an isocyanate and a polyamine or a polyol, the properties such as storage stability and solvent stability of which have been improved by protecting isocyanate groups present in the urethane backbone by using a blocking agent.

The aforementioned polyamine compound refers to a compound having two or more amino groups in a molecule, and is not particularly limited, but includes ethylenediamine, hexamethylenediamine, and the like.

The aforementioned polyol compound refers to a compound having two or more hydroxyl groups in a molecule, and is not particularly limited, but includes polyalkylene polyols including polyester polyols (including polycarbonate polyols), polyether polyols, and polyalkylene glycols such as polypropylene glycols.

The aforementioned isocyanate compound refers to a compound having two or more isocyanate groups in a molecule, and is not particularly limited, but specific examples thereof include 1,3-bis(isocyanatomethyl)benzene, 1,3-bis(isocyanatomethyl)cyclohexane, 1,6-hexamethylene diisocyanate, trimethylhexa methylene diisocyanate, lysine diisocyanate, tolylene diisocyanate, xylylene diisocyanate, meta-tetramethylxylylene diisocyanate, isophorone diisocyanate(3-isocyanatemethyl-3,5,5-trimethylcyclohexyl isocyanate), 1,3- or 1,4-bis(isocyanatemethyl)cyclohexane, diphenylmethane-4,4'-diisocyanate, dicyclohexylmethane-4,4'-diisocyanate, naphthalene-1,5-diisocyanate, 4,4'-diisocyanate-3,3'-dimethyl biphenyl, 1,4,-phenylenediisocyanate hydrogenated tolylene diisocianate, and the like. Among these, 1,6-hexamethylene diisocyanate, tolylene diisocyanate, and isophorone diisocyanate are preferable from the viewpoint of the flexibility.

The aforementioned polyhydroxy compound includes, for example, polyether polyols, polyester polyols, polycarbonate polyols, polyamide polyols, acrylic polyols, polyurethane polyols, and the like. Polyether polyols are preferable from the viewpoint of the flexibility.

The aforementioned blocking agent includes phenols, oximes, alcohols, amines, lactams, and the like. Specific examples of phenols include phenol, cresol, xylenol, ethylphenol, propylphenol, butylphenol, octylphenol, nonylphenol, nitrophenol, chlorophenol, and the like. Specific examples of oximes include formamide oxime, acetamide oxime, acetoxime, diacetyl monoxime, benzophenone oxime, cyclohexanone oxime, methyl ethyl ketoxime, methyl isobutyl ketoxime, dimethyl ketoxime, diethyl ketoxime, and the like. Specific examples of alcohols include methanol, ethanol, propanol, butanol, 2-ethylhexanol, heptanol, hexanol, octanol, isononyl alcohol, stearyl alcohol, benzyl alcohol, methyl glycol, ethyl glycol, ethyl diglycol, ethyl triglycol, butyl glycol, butyl diglycol, ethylene glycol monomethyl ether, ethylene glycol monoethyl ether, ethylene glycol monobutyl ether, propylene glycol monomethyl ether, and the like. Specific examples of amines include dibutylamine, diisopropylamine, di-tert-butylamine, di-2-ethylhexylamine, dicyclohexylamine, benzylamine, diphenylamine, aniline, carbazole, ethyleneimine, polyethyleneimine, monomethylethanolamine, diethylethanolamine, triethylethanolamine, and the like. Specific examples of lactams include lactams such as β-butyrolactam, β-propiolactam, γ-butyrolactam, δ-valerolactam, and ε-caprolactam. Among these, dicyclohexylamine, diphenylamine, ε-caprolactone, and ε-caprolactam are preferable from the viewpoint of the low-temperature curability.

The blocked isocyanate equivalent of the (D) is preferably 500 to 2500 g/eq, further preferably 700 to 2300 g/eq, and most preferably 1000 to 2000 g/eq. When the blocked isocyanate equivalent of the (D) is 100 to 1500 g/eq, the cured product does not become too soft, and the low-temperature curability can be maintained.

The content of the (D) is preferably 0.1 to 50 parts by mass, more preferably 0.5 to 30 parts by mass, and most preferably 1 to 20 parts by mass, relative to the total 100 parts by mass of the (A) to (C). When the content of the (D) is 0.1 to 50 parts by mass, the impact resistance becomes excellent, and the adhesiveness is not lowered.

Commercial products of the (D) include QR-9466, QR-9401-1, QR-9327-1 (produced by ADEKA CORPORATION), BI 7641, BI 7642, BI 7950, BI 7951, BI 7960, BI 7961, BI 7963, BI 7981, BI 7982, BI 7984, BI 7990, BI 7991, BI 7992 (produced by Baxenden Chemicals Ltd.), and the like.

### <Component (E)>

The (E) of the present invention is a spherical or true-spherical inorganic filler having an average particle size of 0.1 to 150 µm, and is a major component that dramatically improves the impact resistance. The (E) is not particularly limited as long as it is a spherical or true-spherical inorganic filler, but includes glass, talc, alumina, boehmite, calcium carbonate, silica, montmorillonite, mica and vermiculite, aluminum hydroxide, glass, titanium oxide, and the like. Glass is preferable, and one made of soda-lime glass is further preferable, from the viewpoint of enhancing the impact resistance with mechanical strength. An inorganic filler which is not hollow is preferably used from the viewpoint of further enhancing the mechanical strength. Here, true-spherical refers to a sphere which is visually substantially spherical, for example, a sphere having a sphericity (µm, JIS B1501: 2009) of 1.0 or less or 0.5 to 1.0. The average particle size of the (E) is preferably 0.1 to 150 µm, further preferably 0.5 to 100 µm, and most preferably 1 to 50 µm. Unless otherwise noted, the method for measuring the average particle size in the Specification is a laser diffraction·scattering method (50% volume-average particle size, ISO 133201 and ISO 9276-1). When the average particle size of the (E) is 0.1 to 150 µm, the workability becomes excellent and the impact resistance can be improved while the viscosity is not increased. As the (E), one that has been surface-treated is preferably used in order to enhance the dispersibility in the epoxy resin composition. The surface-treatment agent includes aminosilane, glycidoxysilane, acrylsilane, and the like, but one that has been surface-treated with glycidoxysilane is preferable from the viewpoint of the dispersibility into the epoxy resin composition.

The specific gravity of the (E) is preferably 1.0 to 4.0, and further preferably 1.5 to 3.0. When the specific gravity of the (E) is 1.0 or more, the dispersibility in the epoxy resin composition becomes excellent, and when the specific gravity of the (E) is 4.0 or less, the (E) does not settle out during storage. Unless otherwise noted, the method for measuring the specific gravity in the Specification is a graduated cylinder method.

The content of the (E) is preferably 0.05 to 20 parts by mass, more preferably 0.1 to 10 parts by mass, and most preferably 0.5 to 5 parts by mass, relative to the total 100 parts by mass of the components (A) to (D). When the content of the (E) is 0.05 parts by mass or more, the impact resistance can be improved, and when the content of the (E) is 20 parts by mass or less, the workability or the adhesive force is not lowered.

Commercial products of the (E) include GB301S, GB731, GB210 (produced by Potters-Ballotini Co., Ltd.), UNIBEADS UBS-0010E, UBS-0020L, UBS-0020E, UBS-0030L, UBS-0030E (produced by Unitika Ltd.), and the like.

### <Component (F)>

The (F) of the present invention is an organic filler. However, the (F) is a component different from the (A) to (D). The organic filler of the present invention only has to be a powder of an organic substance composed of a rubber, an elastomer, a plastic, a polymer (or a copolymer), or the like. Among these, an organic filler having a multilayer structure such as a core shell-type is preferable. The average particle size of the (F) is preferably 0.05 to 50 µm, and further preferably 0.1 to 10 µm, from the viewpoint of the dispersibility. The core and/or shell of the (F) preferably contains a filler composed of a polymer or a copolymer of an acrylic acid ester or a (meth)acrylic acid ester, or a filler composed of a polymer or a copolymer of a styrene compound, and is further preferably composed of a polymer or a copolymer of an acrylic acid ester and/or a (meth)acrylic acid ester, from the viewpoint of improving the impact resistance. In addition, an organic filler which can be pre-gelled by heating is preferable from the viewpoint of improving the adhesive strength by forming a sea-island structure in the cured product.

The absolute specific gravity of the (F) is preferably 0.1 to 10, and more preferably 0.5 to 3. When the absolute specific gravity of the (F) is 0.1 or more, the dispersibility becomes excellent, allowing a sea-island structure to be easily formed, so that the adhesive strength can be improved. When the absolute specific gravity of the (F) is 10 or less, there is no possibility that the (F) settles out during storage. The absolute specific gravity was measured by using the Gay-Lussac pycnometer method.

Commercial products of the (F) include METABLEN W-300A, W-450A, W-600A, W-377 (produced by Mitsubishi Chemical Corporation), GM-0401S, GM-0801, GM-1001, PM-030S, PM-032D, IM-203, IM-401, IM-601, AC-3355, AC-3816N, F301, F320, F351G (produced by Aica Kogyo Co., Ltd.), and the like.

The amount of the (F) to be blended is preferably 0.1 to 80 parts by mass, and more preferably 1 to 40 parts by mass, relative to the total amount 100 parts by mass of the (A) to (D). When the amount of the (F) to be blended is 0.1 parts by mass or more, the adhesive strength can be improved, and when the amount of the (F) to be blended is 80 parts by mass or less, an increase in viscosity can be suppressed, so that there is no possibility that the workability is lowered.

### <Component (G)>

The (G) of the present invention is a latent curing agent, and any of various latent curing agents can be used as long as it makes it possible to cure the epoxy resins of the component (A) and the component (C). In a case where it is necessary to maintain the preservation stability as a one-component epoxy resin composition, the (G) is preferably solid at ordinary temperature (about 25°C). The (G) preferably contains (G-1) a latent curing agent having a melting point of 200°C or more and less than 250°C and/or (G-2) a latent curing agent having a melting point of 100°C or more and less than 200°C, and more preferably contains (G-1) a latent curing agent having a melting point of 200°C or more and less than 230°C and/or (G-2) a latent curing agent having a melting point of 100°C or more and less than 170°C, from the viewpoint of the low-temperature curability. The (G-1) includes dicyandiamide or derivatives thereof, and the (G-2) includes amine adduct compounds. A combination of the (G-1) and the (G-2) is more preferable from the viewpoint of improving the low-temperature curability and the resin strength of the cured product. Specific examples of the derivatives of dicyandiamide include reaction products of dicyandiamide with various epoxy compounds including glycidyl ethers such as phenyl glycidyl ether, butyl glycidyl ether, bisphenol A-diglycidyl ether, and bisphenol F-diglycidyl ether or glycidyl esters and the like of carboxylic acid, and the like. The average particle size of the (G) is preferably 0.1 to 20 µm, and further preferably 1 to 10 µm, from the viewpoint of the dispersibility.

Commercial products of the dicyandiamide or derivatives thereof include, for example, jER CURE DICY 7, 15, 20, 7A (produced by Mitsubishi Chemical Corporation), OMICURE DDA10, DDA50, DDA100, DDA5, CG-325, DICY-F, DICY-M (produced by CVC Thermoset Specialties Inc.), CG-1200, CG-1400 (produced by Air Products Japan, K.K.), and the like.

Known substances of the aforementioned amine adduct compounds include reaction products of amine compounds and isocyanate compounds or urea compounds (urea adduct latent curing agents), or reaction products of amine compounds and epoxy compounds (amine-epoxy adduct latent curing agents), and the like. urea adduct latent curing agents are preferable, and among these, modified aliphatic polyamine adducts and modified alicyclic polyamine adducts are preferable, and modified aliphatic polyamine adducts are further preferable, from the viewpoint of achieving both the low-temperature curability and the preservation stability.

Commercial products of the aforementioned amine adduct compounds include, for example, Fujicure FXE-1000, Fujicure FXR-1030 (products of T & K TOKA CO., LTD.), AMICURE PN-23, PN-23J, PN-31, PN-31J, PN-40J, PN-H, PN-R, MY-24, MY-R (produced by Ajinomoto Fine-Techno Co., Inc.), and the like.

The amount of the (G) to be blended is preferably 1 to 50 parts by mass, further preferably 5 to 40 parts by mass, and most preferably 10 to 30 parts by mass, relative to the total 100 parts by mass of the (A) to (D). When the amount of the (G) to be blended is 1 parts by mass or more, the low-temperature curability can be maintained, and when the amount of the (G) to be blended is 50 parts by mass or less, the preservation stability can be maintained.

In a case where the (G-1) and the (G-2) are used in combination, the blending ratio between the (G-1) and the (G-2) is preferably 8:2 to 2:8, further preferably 7:3 to 3:7, and most preferably 6:4 to 4:6 in terms of mass ratio. When the mass ratio between the (G-1) and the (G-2) is 8:2 to 2:8, the low-temperature curability and the resin strength of the cured product can be improved.

### <Other Components>

Furthermore, the epoxy resin composition of the present invention may further contain an additive such as an inorganic filler other than the (E), an organic filler other than the (F), a pigment, a dye, a silane coupling agent, a leveling agent, a rheology controlling agent, or a preservation stabilizer in an appropriate amount as long as the properties of the present invention are not impaired.

In a case where an inorganic filler other than the (E) or an organic filler other than the (F) is contained, the total amount of both of the inorganic filler other than the (E) and the organic filler other than the (F) contained is preferably 0.1 to 100 parts by mass, relative to the total 100 parts by mass of the (A) to (D). When the total amount of both fillers is 0.1 to 100 parts by mass, there is no possibility that the impact resistance or the adhesiveness is lowered.

The inorganic filler other than the (E) is not particularly limited as long as the inorganic filler is an inorganic filler which has an average particle size of 0.1 µm to 150 µm and is not spherical or has a shape other than a true-spherical shape (for example, has a sphericity (µm) of more than 1.0). Specifically, such an inorganic filler includes inorganic fillers composed of glass, talc, alumina, boehmite, calcium carbonate, silica, montmorillonite, mica and vermiculite, aluminum hydroxide, boron nitride, titanium oxide, and calcium oxide with sizes of less than 0.1 µm, and inorganic fillers having non-spherical or non-true-spherical shapes such as needle shape, flat shape, irregular shape, and fiber shape.

The aforementioned silane coupling agent includes, for example, glycidyl group-containing silane coupling agents such as 3-acryloxypropyl trimethoxysilane, 3-glycidoxypropyl methyldimethoxysilane, 3-glycidoxypropyl methyldiethoxysilane, 3-glycidoxypropyl methyldipropyloxysilane, 3-glycidoxypropyl dimethylmonomethoxysilane, 3-glycidoxypropyl dimethylmonoethoxysilane, 3-glycidoxypropyl dimethylmonopropyloxysilane, 2-(3,4-epoxycyclohexyl)ethyltrimethoxysilane, 3-glycidoxypropyl triethoxysilane, 3-glycidoxypropyl trimethoxysilane, and 3-glycidoxypropyl methyldiethoxysilane, vinyl group-containing silane coupling agents such as vinyltris(β-methoxyetoxy)silane, vinyltriethoxysilane, and vinyltrimethoxysilane, (meth)acryl group-containing silane coupling agents such as 3-methacryloxypropyl methyldimethoxysilane, 3-methacryloxypropyl methyldiethoxysilane, 3-methacryloxypropyl dimethylmonomethoxysilane, 3-methacryloxypropyl dimethylmonoethoxysilane, 3-acryloxypropyl methyidipropyloxysilane, 3-acryloxypropyl methyldimethoxysilane, 3-acryloxypropyl methyldiethoxysilane, 3-acryloxypropyl methyidipropyloxysilane, 3-acryloxypropyl dimethylmonopropyloxysilane, 3-acryloxypropyl dimethylmonomethoxysilane, 3-acryloxypropyl dimethylmonoethoxysilane, 3-acryloxypropyl dimethylmonopropyloxysilane, and γ-methacryloxypropyl trimethoxysilane, amino group-containing silane coupling agents such as N-β-(aminoethyl)-γ-aminopropyl trimethoxysilane, γ-aminopropyl triethoxysilane, and N-phenyl-γ-aminopropyltrimethoxysilane, γ-mercaptopropyl trimethoxysilane, γ-chloropropyl trimethoxysilane, and the like. Among these, glycidyl group-containing silane coupling agents are more preferable from the viewpoint that the adhesive force is excellent. One of these may be used alone or two or more of these may be used in combination. The amount of the silane coupling agent to be blended is preferably 0.1 to 20 parts by mass relative to the total amount 100 parts by mass of the component (A) and the component (B) of the present invention. When the amount of the silane coupling agent to be blended is 0.1 to 20 parts by mass, there is no possibility that the impact resistance is lowered.

As the preservation stabilizer, a borate ester, phosphoric acid, an alkyl phosphoric acid ester, and p-toluenesulfonic acid can be used. The borate ester includes tributyl borate, trimethoxyboroxine, ethyl borate, and the like, but is not limited to these. As the alkyl phosphoric acid ester, trimethyl phosphate, tributyl phosphate, and the like can be used, but the alkyl phosphoric acid ester is not limited to these. A single preservation stabilizer or a plurality of preservation stabilizers in mixture may be used. The amount of the preservation stabilizer to be blended is preferably 0.01 to 10 parts by mass relative to the total 100 parts by mass of the components (A) to (D). When the amount of the preservation stabilizer to be blended is 0.01 to 10 parts by mass, the low-temperature curability is not lowered.

### <Production Method>

The epoxy resin composition of the present invention can be produced by a conventionally known method. For example, the method for producing the epoxy resin composition of the present invention comprises the steps of:
(1) mixing the following component (A) to component (F) and any other component as desired;
(2) heating a mixture obtained by mixing, for example, at 80 to 250°C for 0.1 to 5 hours;
(3) cooling a mixture obtained by heating to, for example, 50°C or less or ordinary temperature, and adding the component (G) to obtain the epoxy resin composition.

More specifically, the epoxy resin composition of the present invention can be produced by blending predetermined amounts of the component (A) to component (F) and any other component as desired and mixing them by using mixing means such as a three-roll or a planetary mixer, heating and mixing the mixture at a temperature of preferably 80 to 250°C, and more preferably 100 to 200°C for preferably 0.1 to 5 hours, more preferably 0.2 to 2 hours, and further preferably 1 hour and 30 minutes±20 minutes, cooling the mixture to 50°C or less or ordinary temperature (25°C), and then mixing the component (G). More preferably, the epoxy resin composition may be obtained by melting and mixing the components (A) and (B) with stirring at a temperature of 80 to 250°C, and more preferably 100 to 200°C for preferably 0.1 to 5 hours, and more preferably 0.2 to 2 hours, further adding the components (C) and (D), followed by mixing and/or leaving to stand, for example, for 0.1 to 2 hours, preferably 0.5 to 1 hour, and after the temperature reaches ordinary temperature (25°C), further adding the component (G), followed by stirring and mixing, for example, for 0.1 to 2 hours, and preferably 0.5 to 1 hour.

### <Applying Method>

As the method for applying the epoxy resin composition of the present invention to an adherend, known methods for sealants and adhesives are used. For example, methods such as dispensing, spray, inkjet, screen printing, gravure printing, dipping, and spin-coating using automatic applicators can be used. Here, the adherend is not particularly limited, but may be, for example, materials which are relatively easy to bond such as iron, aluminum, copper, stainless steel, acrylic resins, glass, wood, and metals, or may be hard-to-bond materials which are relatively difficult to bond such as polypropylene, polyethylene, polyacetal, polyethylene terephthalate, syndiotactic polystyrene, polyethylene naphthalate, polybutylene terephthalate, polyphenylene ether, polyphenylene sulfide, ethylene propylene diene rubber, liquid crystal polymer, cyclo olefin polymer, polycarbonate, 6,6-nylon, polyamide, polyvinyl chloride, and silicone resin.

### <Curing Method and Cured Product>

The curing condition for the epoxy resin composition of the present invention, which is excellent in low-temperature curability, may be a temperature of preferably 80°C or more and less than 170°C, more preferably 80°C or more and less than 150°C, and further preferably 130°C±5°C or 7°C. The epoxy resin composition of the present invention has such excellent low-temperature curability that the epoxy resin composition can be cured even at a low temperature of around 130°C. The curing time is not particularly limited, but is preferably 3 minutes or more and less than 3 hours, and further preferably 5 minutes or more and within 1 hour in a case where the temperature is 80°C or more and less than 170°C.

### <Usage>

The epoxy resin composition of the present invention can be used mainly as an adhesive. The present invention also relates to use of the above-described epoxy resin composition as an adhesive for bonding adherends to each other, adherends at least one adherend of which is a metal to each other, or metals to each other. Besides a one-component epoxy resin composition (one-component adhesive) obtained by mixing all the components, the present invention can also be used as a kit of a two-component epoxy resin composition (two-component adhesive) for which some of the components are separately prepared and stored, and are then mixed when used. Such epoxy resin composition of the present invention can be used for various applications. Specific examples include bonding, sealing, cast molding, coating, and the like of switch parts, head lamps, components in engines, electric components, drive engines, brake oil tanks, body panels such as front hoods, fenders, and doors, windows, and the like for automobiles; bonding, sealing, cast molding, coating, and the like of flat panel displays (liquid crystal displays, organic EL displays, light-emitting diode display devices, field-emission displays), video discs, CD, DVD, MD, pick-up lenses, hard disks, and the like in the field of electronic materials; bonding, sealing, coating, and the like of lithium batteries, lithium-ion batteries, manganese batteries, alkaline batteries, fuel cells, silicon solar cells, dye-sensitized cells, organic solar cells, and the like in the field of batteries; bonding, sealing, coating, and the like of the peripheries of optical switches, optical fiber materials in the peripheries of optical connectors, optical passive components, optical circuit components, the peripheries of opto-electronic integrated circuits in the field of optical components; bonding, sealing, coating, and the like of camera modules, lens materials, finder prisms, target prisms, finder covers, light-reception sensor units, imaging lenses, projection lenses of projection televisions, and the like in the field of optical devices; bonding of gas pipes, water pipes, and the like, lining materials, sealing, coating materials, and the like in the field of infrastructures. Among these, since the epoxy resin composition of the present invention has impact resistance, the epoxy resin composition is suitable for the usage of bonding structural members used in the assembly and the like of vehicles such as automobiles, and is more favorable in bonding of adherends which are favorably used as structural members to each other, adherends at least one adherend of which is a metal to each other, or metal members to each other.

The impact resistance of the epoxy resin composition of the present invention is evaluated from the dynamic resistance to cleavage in the wedge peel impact test in accordance with ISO 11343.

### Examples

Next, the present invention is described in further detail by presenting Examples; however, the present invention is not limited to only these Examples. Note that unless otherwise designated, all the tests were carried out under an environment of 25°C and 55%RH.

### [Examples 1 to 8, Comparative Examples 1 to 2]

Components described below were prepared for preparing compositions.
(A) Bisphenol A-type epoxy resin which is liquid at 25°C, product name: D.E.R. 331 (produced by The Dow Chemical Company), epoxy equivalent: 182 to 192 g/eq, viscosity (25°C): 12 Pa·s
(B-1) Bisphenol A-type epoxy resin which is solid at 25°C, product name: jER 1001 (produced by Mitsubishi Chemical Corporation), epoxy equivalent: 450 to 500 g/eq, softening point: 64°C
(B-2) Bisphenol A-type epoxy resin which is solid at 25°C, product name: jER 1002 (produced by Mitsubishi Chemical Corporation), epoxy equivalent: 600 to 700 g/eq, softening point: 78°C
(B-3) Bisphenol A-type epoxy resin which is solid at 25°C, product name: jER 1003 (produced by Mitsubishi Chemical Corporation), epoxy equivalent: 670 to 770 g/eq, softening point: 89°C
(B-4) Bisphenol A-type epoxy resin which is solid at 25°C, product name: jER 1004 (produced by Mitsubishi Chemical Corporation), epoxy equivalent: 800 to 900 g/eq, softening point: 97°C
(B-5) Bisphenol A-type epoxy resin which is solid at 25°C, product name: jER 1007 (produced by Mitsubishi Chemical Corporation), epoxy equivalent: 1750 to 2200 g/eq, softening point: 128°C
(B-6) Bisphenol A-type epoxy resin which is solid at 25°C, product name: jER 1009 (produced by Mitsubishi Chemical Corporation), epoxy equivalent: 2400 to 3300 g/eq, softening point: 144°C
(B-7) Bisphenol A-type epoxy resin which is solid at 25°C, product name: jER 1010 (produced by Mitsubishi Chemical Corporation), epoxy equivalent: 3000 to 5000 g/eq, softening point: 169°C
(B-8) Bisphenol F-type epoxy resin which is solid at 25°C, product name: jER 4005P (produced by Mitsubishi Chemical Corporation), epoxy equivalent: 950 to 1200 g/eq, softening point: 87°C
(C) Acrylonitrile butadiene rubber (NBR)-modified epoxy resin, product name: EPR-1415-1 (produced by ADEKA CORPORATION), epoxy equivalent: 400 g/eq
(D) Blocked urethane resin, product name: QR-9466 (produced by ADEKA CORPORATION), blocked isocyanate equivalent: 1400 g/eq
(E) Glass filler surface-treated with glycidoxysilane, product name: GB731BPN (produced by Potters-Ballotini Co., Ltd., spherical), average particle size: 32 µm, specific gravity: 2.5
(F) Core shell-type acrylic rubber filler capable of being pre-gelled (the core and the shell are composed of an acrylic copolymer), product name: F351G (produced by Aica Kogyo Co., Ltd.), average particle size: 0.3 µm, absolute specific gravity: 1.15
(G-1) Dicyandiamide, product name: DDA5 (produced by Huntsman Corporation), average particle size: 4 µm, melting point: 207 to 211°C
(G-2) Modified aliphatic polyamine epoxy adduct, product name: FXR-1030 (produced by T & K TOKACO., LTD.), average particle size: 5 to 9 µm, melting point: 135 to 145°C

To the (A) heated to 120°C, the (B) was thrown in, and was dissolved while stirring with a mixer stirrer for 1 hour. To the mixed solution thus obtained, the (C) and the (D) were added, and the mixture was stirred with a planetary mixer for 30 minutes, and left to stand until the temperature reached ordinary temperature. Moreover, the (E) and the (F) were added, and dispersed by stirring for 30 minutes. Furthermore, the (G) was added and dispersed by stirring for 30 minutes. The detailed amounts for preparations were in accordance with Table 1, and all the numerical values are expressed by means of parts by mass. All the tests were conducted at 25°C.

### [Low-temperature Curability]

To a steel plate (SPCC-SD 25 mm×100 mm×1.6 mm), each epoxy resin composition was dropped by using a 1g dropper, and was cured in a hot-air drying furnace at 130°C for 30 minutes. Then, the surface of the cured product thus obtained was prodded and checked by using a glass rod.

### Acceptability Criterion

∘ (Passed): The resin does not adhere to the glass rod.
× (Failed): The resin adheres to the glass rod.

### [Impact Resistance Test/Wedge Peel Impact Test (Dynamic Resistance to Cleavage)]

The impact resistance test (wedge peel impact test) was conducted in compliance with ISO 11343 to obtain the dynamic resistance to cleavage. Specifically, about 1 g of each epoxy resin composition was applied to part of one of two steel plates (SPCC-SD, 20 mm×90 mm×0.8 mm), the two steel plates were bonded such that the bonding area became 20 mm×30 mm, and the epoxy resin composition thus applied was cured at 130°C for 30 minutes. The measurement was conducted on the test piece thus bonded by using an impact testing machine INSTRON CEAST 9340 with an impact speed of 2.0 m/s and an impact energy of 29.3 J. The acceptability criterion was set to 30 kN/m or more.

**Table 1**

| | | Example 1 | Example 2 | Example 3 | Example 4 | Example 5 | Example 6 | Example 7 | Example 8 | Comparative Example 1 | Comparative Example 2 |
|---|---|---|---|---|---|---|---|---|---|---|---|
| A | DER 331 | 70 | 70 | 70 | 70 | 70 | 70 | 70 | 70 | 85 | 85 |
| B-1 | jER 1001 | 15 | | | | | | | | | 15 |
| B-2 | jER 1002 | | 15 | | | | | | | | |
| B-3 | jER 1003 | | | 15 | | | | | | | |
| B-4 | jER 1004 | | | | 15 | | | | | | |
| B-5 | jER 1007 | | | | | 15 | | | | | |
| B-6 | jER 1009 | | | | | | 15 | | | | |
| B-7 | jER 1010 | | | | | | | 15 | | | |
| B-8 | jER 4005P | | | | | | | | 15 | | |
| C | EPR-1415-1 | 5 | 5 | 5 | 5 | 5 | 5 | 5 | 5 | 5 | 5 |
| D | QR-9466 | 10 | 10 | 10 | 10 | 10 | 10 | 10 | 10 | 10 | 10 |
| E | GB731B PN | 1.5 | 1.5 | 1.5 | 1.5 | 1.5 | 1.5 | 1.5 | 1.5 | 1.5 | |
| F | F351G | 20 | 20 | 20 | 20 | 20 | 20 | 20 | 20 | 20 | 20 |
| G-1 | DDA5 | 8 | 8 | 8 | 8 | 8 | 8 | 8 | 8 | 8 | 8 |
| G-2 | FXR-1030 | 6 | 6 | 6 | 6 | 6 | 6 | 6 | 6 | 6 | 6 |
| Low-temperature curability | | ○ | ○ | ○ | ○ | ○ | ○ | ○ | ○ | ○ | ○ |
| Dynamic resistance to cleavage kN/m | | 33.6 | 35.7 | 35.8 | 34.7 | 36.7 | 37.3 | 35 | 34.7 | 29 | 23.8 |

As shown in Table 1, it is understood that Examples 1 to 8 were excellent in low-temperature curability and impact resistance. Comparative Example 1, which did not contain the component (B), had a low impact resistance. Comparative Example 2, which did not contain the component (E), had a significantly low impact resistance. Form the above results, it is understood that an epoxy resin composition which is excellent in impact resistance while maintaining a low-temperature curability can be obtained by adding the components (A) to (G).

Moreover, to examine the correlation between T-peel adhesion strength and dynamic resistance to cleavage, Prototype 1 and Prototype 2 were formed, and comparative evaluation was conducted. Here, Prototypes 1 and 2 were prepared as described below.

### • Prototype 1

Prototype 1 was obtained by mixing 50 parts by mass of a bisphenol A-type epoxy resin (produced by Mitsubishi Chemical Corporation, jER 828), 50 parts by mass of a urethane-modified epoxy resin (produced by ADEKA CORPORATION, EPU-07N), 20 parts by mass of rubber particles (produced by Aica Kogyo Co., Ltd., ZEFIAC F351G), and 10 parts by mass of a polyamine adduct curing agent (produced by T & K TOKA CO., LTD., FXR-1030) by using a planetary mixer under a condition of 25°C.

### • Prototype 2

Prototype 2 was obtained in the same manner as in Prototype 1 except that a urethane-modified epoxy resin was not added and 30 parts by mass of rubber particles was used.

### [T-peel Adhesion Strength]

The T-peel adhesion strength was tested in compliance with JIS K 6854-3: 1999. Specifically, a test piece having a T shape formed as viewed in the thickness direction of two steel plates as a whole was prepared by bonding two steel plates (SPCC-SD, 25 mm× 150 mm×0.5 mm) in a bonding area of 25 mm×100 mm in surfaces in the longitudinal direction, and bending the remaining portions by 90 degrees into L shapes. Each of the epoxy resin compositions of Example 1, Prototype 1, and Prototype 2 was applied to one of the above-described surfaces (bonding area: 25 mm×100 mm) in the longitudinal direction, and the steel plates were laminated to form the above-described T shape, and the epoxy resin was cured at 130°C for 30 minutes with the steel plates fixed with a jig. The temperature of the test piece bonded was returned to ordinary temperature (25°C), and measurement was conducted under an environment of 25°C by using a tensile testing machine with a tensile speed of 50 mm/min. An average of a wave-shaped portion excluding the first and last peaks in a chart obtained by the measurement was obtained as a measured value. The acceptability criterion was set to 3 kN/m or more.

**Table 2**

| | Example 1 | Prototype 1 | Prototype 2 |
|---|---|---|---|
| T-peel adhesion strength kN/m | 5.2 | 8 | 2.5 |
| Dynamic resistance to cleavage kN/m | 33.6 | 25.4 | 16.1 |

As shown in Table 2, the composition of Example 1 had a T-peel adhesion strength higher than that of Prototype 2 but lower than that of Prototype 1. However, the composition of Example 1 had a dynamic resistance to cleavage better than that of Prototype 1. From these results, it was understood that there was a case where the impact resistance was low even when the adhesive strength was high, so that the adhesive strength is not in proportion to the impact resistance, while it was found that the epoxy resin composition of Example 1 of the present invention had favorable T-peel adhesion strength and dynamic resistance to cleavage in a good balance.

### Industrial Applicability

The epoxy resin composition of the present invention is excellent in low-temperature curability and impact resistance and has favorable adhesiveness, and accordingly is useful as an adhesive, a sealant, and a coating agent which can be used for various members.

## Claims

1. An epoxy resin composition comprising:
(A) an epoxy resin which is liquid at 25°C;
(B) an epoxy resin which is solid at 25°C;
(C) a rubber-modified epoxy resin (excluding the (A) and the (B));
(D) a blocked urethane resin;
(E) a spherical inorganic filler having an average particle size of 0.1 µm to 150 µm;
(F) an organic filler; and
(G) a latent curing agent.

2. The epoxy resin composition according to claim 1, wherein
the (B) contains a bisphenol-type epoxy resin.

3. The epoxy resin composition according to claim 1 or 2, wherein
the (E) is a glass filler.

4. The epoxy resin composition according to any one of claims 1 to 3, wherein
the (G) contains dicyandiamide or a derivative thereof and/or an amine adduct compound.

5. The epoxy resin composition according to any one of claims 1 to 4, wherein
a mass ratio of the (A):the (B) is 5:5 to 9:1.

6. The epoxy resin composition according to any one of claims 1 to 5, wherein
a content of the (C) is 0.1 to 50 parts by mass relative to a total 100 parts by mass of the (A) and the (B).

7. The epoxy resin composition according to any one of claims 1 to 6, wherein
a content of the (E) is 0.1 to 10 parts by mass relative to a total amount 100 parts by mass of the (A) and the (B).

8. The epoxy resin composition according to any one of claims 1 to 7, wherein
the epoxy resin composition has a dynamic resistance to cleavage of 30 kN/m or more when cured at 130°C for 30 minutes.

9. The epoxy resin composition according to any one of claims 1 to 8 which is a one-component epoxy resin composition.

10. A cured product obtained by curing the epoxy resin composition according to any one of claims 1 to 9.

11. Use of the epoxy resin composition according to any one of claims 1 to 9 as an adhesive for bonding adherends to each other.

12. A method for curing the epoxy resin composition according to any one of claims 1 to 9, comprising:
further heating the epoxy resin composition at a temperature of 80°C or more and less than 170°C.
